# EUROPÄISCHE PATENTSCHRIFT

(11) **EP 1 187 728 B1**
(45) Veröffentlichungstag und Bekanntmachung des Hinweises auf die Patenterteilung: **03.12.2003**
(21) Anmeldenummer: 00936776.4
(22) Anmeldetag: 22.05.2000
(51) Int. Cl.: B42D 15/10, G03H 1/26

(54) **INFORMATIONSTRÄGER MIT HOLOGRAMM**
INFORMATION CARRIER WITH A HOLOGRAM
SUPPORT D'INFORMATION A HOLOGRAMME

(30) Priorität: 27.05.1999 DE 19924385
(43) Veröffentlichungstag der Anmeldung: 20.03.2002
(73) Patentinhaber: Xetos AG, 82064 Strasslach (DE)
(72) Erfinder: KNOCKE, Frank, D-85560 Ebersberg (DE); EBERT, Dieter, D-81375 München (DE)
(74) Vertreter: Jacoby, Georg
(86) Internationale Anmeldenummer: EP0004642
(87) Internationale Veröffentlichungsnummer: WO00073089

(56) Entgegenhaltungen:
- US-A- 4 140 373
- US-A- 4 889 366
- US-A- 5 200 794
- US-A- 5 284 364

## Beschreibung

Die Erfindung betrifft einen Informationsträger, bei dem Information in Form eines Hologramms enthalten ist, siehe z.B. US-A-4 140 373.

Solche Informationsträger dienen häufig als Sicherheitssiegel, beispielsweise zum Kennzeichnen von Markenprodukten (elektronische Bauteile, Computerbauteile, pharmazeutische Erzeugnisse, Bild-, Ton- und Datenträger, Kleidungsartikel, etc.). Auch bei Banknoten besteht ein Bedürfnis nach Fälschungssicherheit. Hierzu wird Information in Form eines Hologramms mittels entsprechend aufwendiger Verfahren auf den Informationsträger gebracht. Diese Information kann anschließend nicht so einfach über ein herkömmliches Kopiergerät (z.B. zum Kopieren bedruckten Papiers) auf einen anderen Informationsträger kopiert werden.

Häufig wird Information entweder in Form eines Transmissionshologramms oder in Form eines Reflexionshologramms auf Folien gespeichert, die wiederum zu Kopierschutzzwekken auf Produkten aufgeklebt werden. Diese sogenannten Sicherheitssiegel dienen der Authentifizierung des vertriebenen Produktes. Je nach Beleuchtungs- und Blickwinkel nimmt der Betrachter unterschiedliche Farben, Muster und Motive wahr. Der Aufbau dieser Folienschichten und der technische Aufwand bei ihrer Produktion bieten einen wirkungsvollen Schutz vor einem einfachen Kopieren und damit vor einem Vertrieb von gefälschten Produkten mit dem kopierten Sicherheitssiegel. Ein Kopieren von Film- bzw. Volumenhologrammen, welche die Information in einer hochauflösenden Photoschicht gespeichert haben, gelingt grundsätzlich nur mit aufwendigen Laseraufbauten, die das zum Kopieren erforderliche ausreichend kohärente Licht liefern können.

Bei den bekannten Informationsträger mit Hologramm besteht trotz alledem stets ein Bedürfnis, den Kopierschutz weiter zu erhöhen.

Der Erfindung liegt die Aufgabe zugrunde, einen Informationsträger der eingangs genannten Art mit erhöhtem Kopierschutz und/oder einem zusätzlich leicht erkennbarem Sicherheitsmerkmal zu schaffen.

Die Erfindung löst diese Aufgabe mit dem Gegenstand des Anspruchs 1.

Bevorzugte Ausführungsbeispiele der Erfindung sind in den Unteransprüchen 2 bis 9 beschrieben. Ferner sind in den Ansprüchen 10 bis 14 bevorzugte Verfahren für die Herstellung solcher erfindungsgemäßer Informationsträger beschrieben.

Nach Anspruch 1 ist bei einem Informationsträger der eingangs genannten Art das Hologramm die Kombination eines Transmissionshologramms und eines Reflexionshologramms.

Der Informationsträger kann u.a. aus irgendeinem der eingangs genannten Materialien sein, beispielsweise eine Folie (z.B. in Form eines Sicherheitssiegels) oder ein massiveres Material, welches in Durchsicht teilweise transparent ist oder in wenigstens einer im Innern des Materials liegenden Zwischenschicht die Kombination aus Transmissions- und Reflexionshologramm enthält. Der Informationsträger kann auch Teil einer größeren Gesamtheit an Informationsträgern sein, die beispielsweise zusätzlich bedruckte Seitenblätter, Banknoten, Kreditkarten, Verpakkungen, Aufkleber, Verpackungen, Bilder etc. umfassen. Auf diesen Materialien kann zusätzliche Information aufgedruckt oder sonstwie aufgebracht sein, die meist sichtbar ist (d.h. mit Licht im optisch sichtbaren Bereich lesbar bzw. darstellbar ist). Es kann aber auch Information im optisch nicht sichtbaren Bereich enthalten sein (z.B. mit UV- oder IR-Licht lesbare Information).

Auch die in dem jeweiligen Hologrammtyp (Transmissionsoder Reflexionshologramm) enthaltene Information kann optisch sichtbar (d.h. bei Bestrahlung mit sichtbarem Licht erkennbar) oder unsichtbar (z.B. lediglich bei Bestrahlung mit UV-Licht oder IR-Licht erkennbar) gespeichert sein. Die Information selbst kann als dreidimensionales Hologramm (räumliche Wiedergabe eines Objektes in voller dreidimensionaler Wiedergabe), zwei/dreidimensionales Hologramm (flächiges Motiv vor dreidimensionalem Hintergrund), zweidimensionales Hologramm (flächige Grafik), etc. enthalten sein.

Die Information kann auch rein geometrische oder unregelmäßige, (scheinbar) zufällige Muster umfassen. Beispielsweise kann das Transmissionshologramm Information in Form einer oder mehrerer gleichmäßiger Flächen enthalten, welche beispielsweise bei Bestrahlung mit Weißlicht nur in den Regenbogenfarben schillern. Auch dieses "Farbspiel" stellt eine Information im Sinne der Erfindung dar.

Grundsätzlich ist holografisch gespeicherte Information von Film- bzw. Volumenhologrammen wirkungsvoll vor Kopieren geschützt, da hierzu kohärente Lichtquellen verwendet werden müssen. Darüber hinaus bietet die erfindungsgemäße Kombination beider Hologrammtypen in einem Hologramm noch folgende Vorteile: Abhängig von der Beleuchtung (von vorne oder von hinten bezüglich des Informationsträgers, oder bei der Verwendung eines verspiegelten Transmissions- oder Prägehologrammes in der Kombination mit dem reflexionshologramm abhängig vom Beleuchtungs- und Betrachtungswinkel) erscheint jeweils das eine und/oder das andere Hologramm. Die beiden Hologrammtypen können dabei aufgrund ihrer charakteristischen Erscheinungsbilder deutlich voneinander unterschieden werden, so daß es prinzipiell nicht möglich ist, das "Motiv" des einen Hologrammtyps durch ein identisches Motiv in Form des anderen Hologrammtyps zu imitieren. Einer der Hologrammtypen kann dabei als "Wasserzeichen" für den anderen Hologrammtyp dienen. So kann z.B. bei normaler Betrachtung lediglich der eine Hologrammtyp sichtbar werden, während der andere nur unter bestimmten Voraussetzungen (abhängig von der Lichtwellenlänge oder dem Auftreffwinkel des Rekonstruktionslichtes, etc.) erscheint, die nur Eingeweihten bekannt sind. Außerdem wird das Kopieren nochmals erschwert, da die beiden Hologrammtypen jeweils auf unterschiedliche Weise kopiert werden müssen. So wird beispielsweise der "versteckte" Hologrammtyp beim Kopieren des sichtbaren Hologrammtyps nicht automatisch kopiert, so daß die Kopie nicht mehr den "versteckten" Hologrammtyp enthält.

Gemäß einem ersten Ausführungsbeispiel besteht die Kombination der beiden Hologrammtypen bevorzugt darin, daß das Transmissions- und das Reflexionshologramm in zwei getrennten Hologrammschichten enthalten sind, wobei die beiden Hologrammschichten übereinander angeordnet sind und wenigsten eine Hologrammschicht transparent ist. Auch bei dieser Schichtung zweier Hologrammschichten erscheinen beide Hologrammtypen gleichzeitig, sofern die obere der Ausleseseite des Informationsträger näher liegende Hologrammschicht transparent ist.

Gemäß einem zweiten Ausführungsbeispiel besteht die Kombination darin, daß das Transmissions- und das Reflexionshologramm zusammen in einer einzigen Hologrammschicht enthalten sind. Dabei wird bei der Herstellung eines solchen Informationsträgers bevorzugt gleichzeitig beide Hologrammtypen oder zuerst das Transmissions- und anschließend das Reflexionshologramm aufgezeichnet, oder umgekehrt. Alternativ kann bei der Herstellung des Informationsträgers gemäß dem zweiten Ausführungsbeispiel das Transmissions- und das Reflexionshologramm abwechselnd pixelweise oder linienweise aufgezeichnet werden. Diese pixelweise bzw. linienweise Aufzeichnung kann dabei bevorzugt entweder mittels einer entsprechenden Maske erfolgen, wobei das Transmissions- und das Reflexionshologramm dann zeitlich nacheinander aufgezeichnet werden, oder mittels eines gesteuerten Lichtstrahls.

Bevorzugt ist das Reflexionshologramm derart ausgelegt, daß es der ein-, mehr- oder echtfarbigen Ausleuchtung des Transmissionshologramms dient. Vorteilhaft kann somit nahezu jede Art von Transmissionshologramm (nicht nur in Form von Regenbogenhologrammen, o.ä) auch mit genügender Kontrastschärfe farbgetreu wiedergegeben werden.

Falls das Trägermaterial des Informationsträgers lichtundurchlässig ist, ist auf einer Seite der beiden bzw. der einzelnen Hologrammschicht eine Licht in die Hologrammschicht(en) zurück reflektierende Schicht vorgesehen. Das über die Betrachtungsfläche auf den Informationsträger auftreffende Licht passiert die die Kombination beider Hologrammtypen enthaltende Hologrammschicht(en) und wird von der reflektierenden Schicht zurück in die Hologrammschicht(en) reflektiert. Somit gelangt der Rekonstruktionslichtstrahl sozusagen auch von hinten in die Hologrammschicht(en). Vorteilhaft können mit dieser Maßnahme auch die üblichen Transmissionshologramm (welche normalerweise von hinten auftreffendes Rekonstruktionslicht benötigen) mit von vorne auftreffendem Rekonstruktionslicht betrachtet werden.

Bevorzugt ist das Transmissions- und/oder das Reflexionshologramm derart enthalten, daß es lediglich unter einem oder mehreren bestimmten Betrachtungswinkeln sichtbar wird. Vorteilhaft kann damit einer der Hologrammtypen als einfach erkennbares optisches Sicherheitssiegel, ähnlich einem Wasserzeichen in einem Geldschein, die eindeutige und zuverlässige Erkennbarkeit des damit versehenen Originalproduktes erhöhen. Außerdem können je nach Betrachtungswinkel (Bewegungsabfolge bei Neigen des Informationsträgers gegenüber der Beleuchtungsquelle) unterschiedliche Motive bzw. Informationen jeweils in dem Transmissions- und/oder dem Reflexionshologramm sichtbar werden.

Bevorzugt umfaßt die Information des Transmissionshologramms und/oder des Reflexionshologramm zumindest teilweise codierte Information. Neben der unmittelbar erkennbaren Information ist somit noch eine Information enthalten, die lediglich mit einem bestimmten beispielsweise auf einem weiteren Informationsträger als Masterschlüssel enthaltenem Entschlüsselungsschlüssel erkennbar ist, oder erst bei Verwendung mehrerer Rekonstruktionsstrahlen in einer bestimmten Winkelanordnung sichtbar wird.

Bevorzugt ist die codierte Information des Transmissionshologramms der Entschlüsselungsschlüssel für die codierte Information des Reflexionshologramms, oder umgekehrt. Dadurch wird die codierte Information nur dann decodiert und somit sichtbar, wenn auch der andere Hologrammtyp noch vollständig vorhanden ist. In dem einen Hologrammtyp kann beispielsweise zusätzlich zu dem eigentlich erkennbaren Motiv ein Entschlüsselungsschlüssel enthalten sein, der lediglich einen einheitlichen "Grauschleier" oder ähnliches über das Motiv legt, als solcher somit nicht erkennbar ist. Erst bei Bestrahlung des Informationsträgers mit einer bestimmten Wellenlänge (z.B. im optisch nicht sichtbaren Bereich) oder unter einem oder mehreren bestimmten Winkeln erscheint der Entschlüsselungsschlüssel und decodiert die codierte Information des anderen Hologrammtyps. Auch der letztere Hologrammtyp kann neben der codierten Information noch eine nicht codierte Information umfassen, die optisch sichtbar ist. Somit wird bei einem unerlaubten Kopieren des Informationsträgers der Entschlüsselungsschlüssel nicht kopiert (da beispielsweise der Wellenlängenbereich oder der oder die Rekonstruktionswinkel nicht bekannt sind, mit dem der Entschlüsselungsschlüssel und/oder die codierte Information aufgenommen sind) und die codierte Information der unerlaubten Kopie wird bei Bestrahlung mit der bestimmten Wellenlänge nicht mehr decodiert.

Bevorzugt ist auf der Betrachtungsfläche eine transparente Kopierschutzschicht mit einer die Polarisation des Ausleselichtes drehenden und/oder filternden Eigenschaft aufgebracht. Der Vorteil dieser Kopierschutzschicht liegt darin, daß sie beispielsweise mit dem bloßen Auge nicht erkennbar ist. Wird der Informationsträger nun photografisch bzw. holografisch kopiert, so enthält die Kopie nicht mehr diese Kopierschutzschicht. Eine über Kopie und Original gelegte Polarisationsfolie (oder ein entsprechender Polarisator) kann bei entsprechender Ausrichtung die beiden voneinander unterscheiden, da das Original bei einer bestimmten Ausrichtung der Polarisationsfolie verdunkelt. Wird mit polarisiertem Licht kopiert, so kann bei bestimmter Ausrichtung die Information des Originals beispielsweise überhaupt nicht ausgelesen werden. Für weitere Ausführungen der Kopierschutzschicht wird auf die deutsche Patentanmeldung 199 04 282.9 verwiesen, deren Offenbarung hiermit vollinhaltlich in die vorliegende Anmeldung aufgenommen ist. Die dort beschriebenen vorteilhaften Ausführungsbeispiele der Kopierschutzschicht mit dem ein Hologramm aufweisenden Informationsträger können alternativ oder gemeinsam mit den beiden Hologrammtypen verwendet werden. So kann beispielsweise die codierte Information des Reflexionshologramms allein oder in Verbindung mit der codierten Information des Transmissionshologramms ein Entschlüsselungsschlüssel für die codierte Information der Kopierschutzschicht sein, oder umgekehrt. Für den Durchschnittsfachmann ist es selbstverständlich bei einer Kombination dreier Möglichkeiten (Kopierschutzschicht plus zwei Hologrammtypen), die jeweils codierte Information bzw. einen Entschlüsselungsschlüssel umfassen können, zwei von diesen beliebig zu kombinieren, so daß die Zweierkombination die codierte Information bzw. den Entschlüsselungsschlüssel gemeinsam umfaßt. Alternativ ist ein Hologrammtyp an der Codierung bzw. Decodierung nicht beteiligt.

Besonders bevorzugt umfaßt bei Verwendung des Informationsträgers als Sicherheitssiegel die (codierte) Information des Transmissionshologramms und/oder des Reflexionshologramms zumindest teilweise individualisierte Information. So ist vorteilhaft bei der Herstellung von Sicherheitssiegeln möglich, beispielsweise fortlaufende Seriennummern in das Sicherheitssiegel einzubringen.

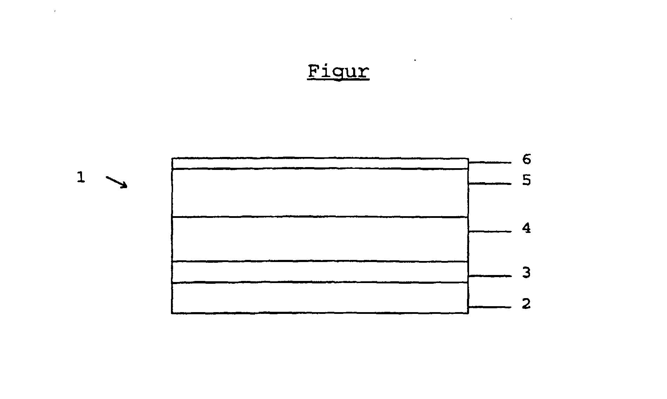

Die Erfindung und weitere Vorteile der Erfindung werden nunmehr anhand bevorzugter Ausführungsbeispiele mit Bezug auf die beigefügte Figur näher erläutert

In der Figur ist eine schematische Querschnittansicht eines ersten Ausführungsbeispiels eines erfindungsgemäßen Informationsträgers 1 gezeigt. Der Informationsträger 1 kann beispielsweise als Datenträger oder als Sicherheitssiegel dienen.

Der Informationsträger 1 besteht aus einer Trägerschicht 2, beispielsweise aus einem Kunstoff-, Papier- oder Stoffmaterial, oder einem sonstigen Material (abhängig vom Verwendungszweck des Informationsträgers 1). Auf die Trägerschicht 2 ist eine lichtreflektierende Schicht 3 geklebt oder sonstwie aufgebracht, welche das von oben auf die Schicht 3 fallende Licht nach oben zurück reflektiert. Gemäß dem ersten Ausführungsbeispiel ist auf die lichtreflektierende Schicht 3 eine erste Hologrammschicht 4 aufgebracht, in welcher der erste Hologrammtyp (Transmissions- oder Reflexionshologramm) aufgezeichnet ist. Auf der ersten Hologrammschicht 4 ist eine zweite Hologrammschicht 5 aufgebracht, in welcher der zweite Hologrammtyp aufgezeichnet ist. Auf der zweiten Hologrammschicht 5 ist optional noch eine Schutzschicht 6 aufgebracht.

Gemäß einem zweiten nicht dargestellten Ausführungsbeispiel ist auf der lichtreflektierenden Schicht 3 lediglich eine Hologrammschicht 4 aufgebracht, in welcher beide Hologrammtypen aufgezeichnet sind.

Grundsätzlich wird in der Holographie zwischen Transmissions- und Reflexionshologrammen unterschieden. Bei dem Transmissionshologramm wird das Interferenzmuster im wesentlichen lediglich in einer Ebene - z.B. einer Oberfläche des Informationsträgers 2 - gespeichert, während bei einem Reflexionshologramm die Information auch noch in die Tiefe enthalten ist. Dies soll nachfolgend näher erläutert werden.

Ein Transmissionshologramm entsteht, wenn die Objekt- und Referenzstrahlen von der gleichen Seite auf eine Hologrammschicht (Photoplatte, etc.) fallen. In diesem Fall stehen die Interferenzlinien von Objekt- und Referenzstrahl fast senkrecht zur Hologrammschicht. Die so entstandene Gitterstruktur beugt beim Auslesen des in der Hologrammschicht gespeicherten Hologramms das zum Auslesen verwendete Weißlicht und zerlegt es in seine Spektralfarben. Diese Weißlicht-Transmissionshologramme werden daher auch als Regenbogenhologramme bezeichnet.

Ein Transmissionshologramm kann auch als Reliefhologramm vorliegen, dessen holografisch enthaltene Information in einer Reliefstruktur auf einer Außenfläche steckt. Die holografisch enthaltene Information wird bei Betrachten dieser Außenfläche bzw. bei Beleuchten dieser Außenfläche mit bestimmten Lichtquellen sichtbar. Bei transparenten Hologrammschichten kann die Information in geschwärzten, lichtbeugenden bzw. -brechenden Bereichen innerhalb des transparenten Materials liegen, wobei die Hologrammschicht dann von hinten durchleuchtet wird und das Hologramm dabei von vorne sichtbar wird. Für den Fall einer nicht transparenten Trägerschicht 2 ist daher die lichtreflektierende Schicht 3 hinten auf der Hologrammschicht 4 aufgebracht, so daß der Rekonstruktionslichtstrahl vorne auf die Hologrammschicht 4 auffällt, hinten an der lichtreflektierenden Schicht 3 zurück durch die Hologrammschicht 4 reflektiert wird und als rekonstruierter Objektstrahl vorne austritt.

Ein Reflexionshologramm entsteht, wenn der Objekt- und der Referenzlichtstrahl jeweils von vorne und von hinten auf die Hologrammschicht fallen und dort miteinander interferieren. In diesem Fall verlaufen die Interferenzlinien parallel zur Hologrammschicht. Bei einem transparenten Phasenhologramm entstehen so Ebenen mit unterschiedlichen Brechungsindizes. An diesen sogenannten Bragg-Ebenen wird das einfallende Ausleselicht reflektiert und dabei eine bestimmte Wellenlänge (und damit Frequenz) des Lichtes durch Interferenz (bei welcher die Bragg-Bedingung erfüllt ist) selektiert. Mit Weißlicht bestrahlte Reflexionshologramme erscheinen dadurch einfarbig, und zwar in der Farbe des bei der Aufnahme verwendeten Referenzlichtstrahls (sofern sich die lichtempfindliche Hologrammschicht bei der Belichtung nicht verändert hat, z.B. geschrumpft oder geschwellt ist). Werden bei der Aufzeichnung des Hologramms mehrere Lichtwellenlängen verwendet (Rot, Grün und Blau), so erscheint die Information beim Auslesen mit Weißlicht mehrfarbig oder sogar echtfarbig.

Das aus einem Reflexionshologramm rekonstruierte Bild hat dabei eine Wellenlängenabhängigkeit sowie eine Winkelabhängigkeit des auftreffenden Rekonstruktionsstrahl. Dies kann dazu genutzt werden mehrere unterschiedliche Motive gleichzeitig holografisch in der Hologrammschicht zu speichern.

Beide Hologrammtypen haben nach den oben beschriebenen Eigenschaften deutlich unterscheidbare Erscheinungsbilder.

Gemäß einem nicht dargestellten Ausführungsbeispiel kann anstelle oder zusätzlich zu der Schutzschicht 6 eine Kopierschutzschicht vorgesehen sein. Für weitere Details und Vorteile einer solchen Kopierschutzschicht wird auf die deutsche Patentanmeldung 199 04 282.9 verwiesen, deren Inhalt hiermit vollinhaltlich aufgenommen ist.

Die einzelnen Schichten 2 bis 6 können dabei so miteinander verklebt sein, daß beim Versuch eines Ablösens einzelner Schichten die jeweilige abzulösende Schicht zumindest teilweise zerstört wird. Hierzu kann beispielsweise eine Perforation in die einzelnen Schichten 2 bis 6 eingebracht werden, welche diese beim Ablösen in kleinere Abschnitte zertrennt. Es kann ebenfalls ein Diffusionskleber eingesetzt werden, der in das Schichtmaterial eindringt und die Schicht dann beim Ablösen zerstört.

Die von den beiden Hologrammtypen dargestellte Information kann jeweils auch zumindest teilweise codiert sein. Darüber hinaus kann die codierte Information des einen Hologrammtyps als Entschlüsselungsschlüssel für eine codierte Information des anderen Hologrammtyps dienen. Die codierte Information im jeweiligen Hologramm kann dabei zusätzlich zu einem sichtbaren Hologramm vorliegen und als solche nicht erkennbar sein. Somit weiß der Kopierer überhaupt nichts von der vorhandenen codierten Information.

Ein mögliche Codierung besteht darin, einen entweder dunklen oder hellen Pixel der zu codierenden Information mittels vier im Quadrat angeordneter Unterpixel des Transmissions- und des Reflexionshologramms (ggf. auch der Kopierschutzschicht) darzustellen. Ein dunkler Pixel entspricht beispielsweise vier dunklen Unterpixeln, während ein heller Pixel zwei beliebigen hellen und zwei beliebigen dunklen Unterpixeln entspricht. Insgesamt werden die Unterpixel der einzelnen Schichten 2 und 4 jedoch stochastisch verteilt, so daß in beiden Hologrammtypen lediglich ein gleichmäßiger Grauschleier erkennbar ist. Die einzige Bedingung ist, daß für einen hellen Pixel der zu codierenden Information die beiden dunklen Unterpixel jedes Hologrammtyps zusammenfallen, während sie für einen entsprechenden dunklen Pixel gerade nicht zusammenfallen.

Diese Codierung kann auch lediglich zwischen einem der Hologrammtypen und einer auflegbaren Folie mit einem entsprechenden Pixelmuster als Entschlüsselungsschlüssel angewandt werden. Somit werden die einzelnen Pixel des jeweiligen Hologrammtyps erst durch die aufgelegte Folie sichtbar, deren enthaltenes "graues" Pixelmuster zusammen mit dem "grauen" Pixelmuster des jeweiligen Hologrammtyps die Information erkennbar macht.

Die kodierte Information kann auch durch eine bestimmte Rekonstruktionslichtanordnung entschlüsselt werden. Jedem Unterpixel im Hologramm kann ein ganz bestimmter nur dem Hersteller bekannter Rekonstruktionswinkel zugeordnet werden. Erst bei der Bestrahlung unter den dem Hersteller bekannten Beleuchtungswinkeln erscheint die entschlüsselte Information. Die erforderlichen Beleuchtungswinkel können z.B. durch eine optische Fouriertransformation aus einem Masterschlüssel gewonnen werden.

So kann der Informationsträger 1 beispielsweise bei seiner Verwendung als Sicherheitssiegel zumindest teilweise individualisierte Information (z.B. eine laufende Seriennummer) in der codierten Information eines entsprechenden Hologrammtyps enthalten, die nur mit einem Masterentschlüsselungsschlüssel auslesbar ist. Die fortlaufende Seriennummer kann aber auch in einen der beiden Hologrammtypen uncodiert eingebracht werden bzw. die Information eines Hologrammtyps vollständig umfassen (das Reflexionshologramm kann beispielsweise lediglich eine zweidimensional dargestellte Seriennummer zeigen, die unter einem bestimmten Betrachtungswinkel erscheint). Der individualisierte Code kann bei der Produktion des als Sicherheitssiegel dienenden Informationsträger beispielsweise mittels einer transparenten Flüssigkristallanzeige technisch einfach eingebracht werden. Beim Kopieren muß dann jeder Sicherheitssiegel einzeln kopiert werden; ein "Abdruck" eines Sicherheitssiegels als Masterkopie liefert nicht mehr die fortlaufende Seriennummer.

Die Kombination von Transmissions- und Reflexionshologramm kann dabei alternativ über folgende Verfahren hergestellt werden:

Die beiden Hologrammtypen können jeweils in eine der beiden Hologrammschichten 4 und 5 eingeschrieben werden. Die beiden Hologrammschichten 4 und 5 mit den eingeschriebenen Hologrammen werden anschließend übereinander geklebt. Dabei muß wenigstens die oben liegende Hologrammschicht 5 transparent sein, damit das Hologramm der darunter liegenden Hologrammschicht 4 sichtbar wird. Die unten liegende Hologrammschicht 4 kann dabei eine undurchsichtige Schicht (z.B. Metallschicht, etc.) sein, deren Transmissionshologramm in einer Oberflächenstruktur aufgezeichnet ist.

Sofern in der unten liegenden Hologrammschicht 4 ein bestimmtes Reflexionshologramm aufgezeichnet ist, das nur eine bestimmte Wellenlänge aus dem Weißlicht selektiert und nach oben reflektiert, wird somit auch das Transmissionshologramm der darüber liegenden Hologrammschicht 5 mit dieser einen Wellenlänge des reflektierten Lichtstrahls (Rekonstruktionslichtstrahl für das Transmissionshologramm) ausgelesen. Darüber hinaus kann das bestimmte Reflexionshologramm den Rekonstruktionslichtstrahl auch nur unter einem bestimmten Winkel reflektieren, so daß auch ganz allgemeine Transmissionshologramme mit Weißlicht ausgelesen werden können, die also nicht in Form eines Benton-Hologramms bzw. Regenbogenhologramms aufgezeichnet sind. Insbesondere kann das Reflexionshologramm aus dem weißen Licht pixel- oder linienweise rotes, grünes und blaues Licht selektieren, so daß das darüber liegende und entsprechend aufgenommene Transmissionshologramm mehr- oder echtfarbig erscheint.

Gemäß dem zweiten Ausführungsbeispiel kann ein und dieselbe Hologrammschicht zweimal belichtet werden, und zwar nacheinander zur Speicherung des Transmissions- und des Reflexionshologramms, oder umgekehrt. Dabei müssen Referenz- und Objektstrahl bei der Aufnahme des Transmissionshologramms von der gleichen Seite und bei der Aufnahme des Reflexionshologramms von gegenüberliegenden Seiten auf die Hologrammschicht fallen.

Gemäß einem dritten nicht dargestellten Ausführungsbeispiel können das Transmissions- und das Reflexionshologramm auch abwechselnd linienweise oder sogar auch abwechselnd pixelweise aufgezeichnet werden. Hierzu wird der Objektstrahl mittels einer gesteuerten Objektstrahl-Modulationseinheit und einer Linse beispielsweise auf 1x1 mm² große Pixelflächen der Hologrammschicht fokusiert. Je nach Hologrammtyp wird der Referenzstrahl von derselben Seite oder von der gegenüberliegenden Seite jeweils auf dieselbe Pixelfläche wie der Objektstrahl fokusiert. In diese Pixelfläche der Hologrammschicht wird damit ein vollständiges Hologramm des Objektes aufgezeichnet. Für die mehrfarbige Aufzeichnung können auch die einzelnen Farben (z.B. Grundfarben) pixelweise aufgezeichnet werden. Das gleiche gilt auch für die linienweise Aufnahme der einzelnen Hologrammtypen. Die Pixelfläche bzw. Linienbreite kann dabei im Prinzip beliebig gewählt werden, wobei bei kleiner werden Flächen bzw. Breiten die Auflösung des aufgezeichneten Hologramms abnimmt. Außerdem können für verschiedene Pixel unterschiedliche Hologramme aufgezeichnet werden, die beispielsweise beim Betrachten abhängig vom Betrachtungswinkel erscheinen.

Gemäß einem alternativen Herstellungsverfahren kann die pixelweise bzw. linienweise Aufzeichnung auch mittels einer geeigneten Maske erfolgen, wobei z.B. erst das Transmissionshologramm aufgezeichnet wird, die Maske anschließend so verschoben wird, daß die noch nicht belichteten Bereiche freigelegt werde und dann das Reflexionshologramm aufgezeichnet wird. Auch hier können mit geeigneten Masken oder Verschiebungen einer einzelnen Maske mehrere unterschiedliche Motive pro Hologrammtyp aufgezeichnet werden.

Nachfolgend soll zum besseren Verständnis des Vorteils der Erfindung ein gängiges Kopierverfahren zum Kopieren von Hologrammen erläutert werden, die sogenannte Kontaktkopie. Wie in der gewöhnlichen Photographie werden die von allen anderen Schichten 2 und 3 sowie ggf. der Kopierschutzschicht befreiten Hologrammschichten 4 und 5 zusammen auf einen Kopierträger (Aufzeichnungsmaterial) gelegt, auf welches die beiden Hologrammtypen kopiert werden sollen. Würden die beiden Träger beim Kopieren des Hologramms nun mit nicht-kohärentem Licht (bzw. Licht zu kurzer Kohärenzlänge) oder unter dem falschen Rekonstruktionswinkel bestrahlt, so wäre die erhaltene Kopie unbrauchbar oder äußerst unbefriedigend. Erst bei den richtigen Beleuchtungswinkeln entstehen die gespeicherten Objektlichtwellen, welche nur bei Verwendung kohärentem Lichts mit der Beleuchtungswelle interferieren und den Kopierträger mit der Hologrammstruktur (Interferenzmuster) belichten.

Bei der Kontaktkopie muß jedoch zwischen der Kopie des Transmissions- und des Reflexionshologramms unterschieden werden. Bei der Transmissionskopie müssen der von dem Informationsträger 1 ausgelesene Objektstrahl und der zum Aufzeichnen in den Kopierträger verwendete Referenzstrahl auf die gleiche Seite des Kopierträgers fallen, während sie bei der Reflexionskopie auf gegenüberliegende Seiten des Kopierträgers fallen müssen. Somit müssen zwei unterschiedliche Kopieranordnungen (einmal liegt der Kopierträger über und das andere Mal unter dem Originalfilm) verwendet werden, was den Kopierschutz nochmals erhöht. Insbesondere kann die erwähnte Verwendung mehrerer Referenzstrahlwinkel den Aufwand für die Anfertigung einer Kopie immens erhöhen. Die Verschlüsselung der Hologramminformation mit vielen unterschiedlichen Referenzstrahlwinkeln bzw. einer geheimen speziellen Referenzlichtwelle kann ein Kopieren sogar unmöglich machen.

## Patentansprüche

1. Informationsträger (1), bei dem Information in Form eines Hologramms enthalten ist, **dadurch gekennzeichnet, daß** das Hologramm die Kombination eines Transmissionshologramms und eines Reflexionshologramms ist.

2. Informationsträger (1) nach Anspruch 1, **dadurch gekennzeichnet, daß** das Transmissions- und das Reflexionshologramm in zwei getrennten Hologrammschichten (4, 5) enthalten sind, wobei die beiden Hologrammschichten (4, 5) übereinander angeordnet sind und wenigstens eine Hologrammschicht (4, 5) transparent ist.

3. Informationsträger (1) nach Anspruch 1, **dadurch gekennzeichnet, daß** das Transmissions- und das Reflexionshologramm zusammen in einer einzigen Hologrammschicht enthalten sind.

4. Informationsträger (1) nach einem der vorhergehenden Ansprüche, **dadurch gekennzeichnet, daß** das Reflexionshologramm derart ausgelegt ist, daß es der ein-, mehr- oder echtfarbigen Ausleuchtung des Transmissionshologramms dient.

5. Informationsträger (1) nach einem der vorhergehenden Ansprüche, **dadurch gekennzeichnet, daß** auf einer Seite der beiden bzw. der einzelnen Hologrammschicht (4, 5) eine Licht in die Hologrammschicht (en) (4, 5) zurück reflektierende Schicht (3) vorgesehen ist.

6. Informationsträger (1) nach einem der vorhergehenden Ansprüche, **dadurch gekennzeichnet, daß** das Transmissions- und/oder das Reflexionshologramm derart enthalten ist, daß es lediglich unter einem oder mehreren bestimmten Betrachtungswinkeln sichtbar wird.

7. Informationsträger (1) nach einem der vorhergehenden Ansprüche, **dadurch gekennzeichnet, daß** die Information des Transmissionshologramms und/oder des Reflexionshologramm zumindest teilweise codierte Information umfaßt.

8. Informationsträger (1) nach Anspruch 7, **dadurch gekennzeichnet, daß** die codierte Information des Transmissionshologramms der Entschlüsselungsschlüssel für die codierte Information des Reflexionshologramms ist, oder umgekehrt.

9. Informationsträger (1) nach einem der vorhergehenden Ansprüche, **dadurch gekennzeichnet, daß** auf der Betrachtungsfläche (7) eine transparente Kopierschutzschicht mit einer die Polarisation des Ausleselichtes drehenden und/oder filternden Eigenschaft aufgebracht ist.

10. Informationsträger (1) nach einem der vorhergehenden Ansprüche, **dadurch gekennzeichnet, daß** bei Verwendung des Informationsträgers (1) als Sicherheitssiegel die codierte Information des Transmissionshologramms und/oder des Reflexionshologramms zumindest teilweise individualisierte Information umfaßt.

11. Verfahren zur Herstellung eines Informationsträgers nach Anspruch 2, **dadurch gekennzeichnet, daß** das Transmissions- und das Reflexionshologramm jeweils in einer Hologrammschicht (4; 5) aufgezeichnet werden und anschließend die beiden Hologrammschichten (4, 5) aufeinander laminiert werden.

12. Verfahren zur Herstellung eines Informationsträgers nach Anspruch 3, **dadurch gekennzeichnet, daß** in einer einzelnen Hologrammschicht zuerst das Reflexions- und anschließend das Transmissionshologramm aufgezeichnet werden, oder umgekehrt.

13. Verfahren zur Herstellung eines Informationsträgers nach Anspruch 3, **dadurch gekennzeichnet, daß** in einer einzelnen Hologrammschicht das Transmissionsund das Reflexionshologramm abwechselnd pixelweise oder linienweise aufgezeichnet werden.

14. Herstellungsverfahren nach Anspruch 13, **dadurch gekennzeichnet, daß** die pixelweise bzw. linienweise Aufzeichnung mittels wenigstens einer entsprechenden Maske erfolgt, und das Transmissions- und das Reflexionshologramm zeitlich nacheinander aufgezeichnet werden.

15. Herstellungsverfahren nach Anspruch 12, **dadurch gekennzeichnet, daß** die pixelweise bzw. linienweise Aufzeichnung mittels eines gesteuerten Lichtstrahls erfolgt.

## Claims

1. An information carrier (1) in which information is contained in the form of a hologram, **characterized in that** the hologram is the combination of a transmission hologram and a reflection hologram.

2. The information carrier (1) according to claim 1, further **characterized in that** the transmission hologram and the reflection hologram are contained in two separate hologram layers (4, 5), wherein the two hologram layers (4, 5) are arranged over one another and at least one hologram layer (4, 5) is transparent.

3. The information carrier (1) according to claim 1, further **characterized in that** the transmission and reflection holograms are together contained in a single hologram layer.

4. The information carrier (1) according to one of the preceding claims, further **characterized in that** the reflection hologram is designed in such a way that it serves for one-color, multicolor or true-color illumination of the transmission hologram.

5. The information carrier (1) according to one of the preceding claims, further **characterized in that** a layer (3) which back-reflects lights into hologram layer(s) (4, 5) is provided on one side of the two hologram layers or one of the individual hologram layers (4, 5).

6. The information carrier (1) according to one of the preceding claims, further **characterized in that** the transmission hologram and/or the reflection hologram is contained in such a way that it is visible only at one or more specific viewing angles.

7. The information carrier (1) according to one of the preceding claims, further **characterized in that** the information of the transmission hologram and/or the reflection hologram comprises at least partially coded information.

8. The information carrier (1) according to claim 7, further **characterized in that** the coded information of the transmission hologram is the decoding key for the coded information of the reflection hologram, or vice versa.

9. The information carrier (1) according to one of the preceding claims, further **characterized in that** a transparent copy-protection layer with a property that rotates the polarization of the readout light and/or a filtering property is introduced onto the viewing surface (7).

10. The information carrier (1) according to one of the preceding claims, further **characterized in that** the coded information of the transmission hologram and/or the reflection hologram contains individualized information, at least partially, when information carrier (1) is used as a security seal.

11. A method for producing an information carrier according to claim 2, further **characterized in that** the transmission hologram and the reflection hologram are each recorded in a hologram layer (4; 5) and then the two hologram layers (4, 5) are laminated one on top of the other.

12. The method for producing an information carrier according to claim 3, further **characterized in that** first the reflection hologram and then the transmission hologram are recorded in a single hologram layer, or vice versa.

13. The method for producing an information carrier according to claim 3, further **characterized in that** the transmission hologram and the reflection hologram are recorded by alternating pixels or by alternating lines in a single hologram layer.

14. The production method according to claim 13, further **characterized in that** the pixel or line recording is produced by means of at least one appropriate mask and the transmission hologram and the reflection hologram are recorded sequentially in time.

15. The production method according to claim 12, further **characterized in that** the pixel or line recording is produced by means of a controlled light beam.

## Revendications

1. Support d'informations (1), dans lequel des informations sont contenues sous forme d'hologramme, **caractérisé en ce que** l'hologramme est la combinaison d'un hologramme de transmission et d'un hologramme de réflexion.

2. Support d'informations (1) selon la revendication 1, **caractérisé en ce que** l'hologramme de transmission et l'hologramme de réflexion sont contenus dans deux couches d'hologramme séparées (4, 5), les deux couches d'hologramme (4, 5) étant disposées l'une au-dessus de l'autre et au moins une couche d'hologramme (4, 5) étant transparente.

3. Support d'informations (1) selon la revendication 1, **caractérisé en ce que** l' hologramme de transmission et l'hologramme de réflexion sont contenus ensemble dans une seule couche d'hologramme.

4. Support d'informations (1) selon l'une quelconque des revendications précédentes, **caractérisé en ce que** l'hologramme de réflexion est configuré de telle sorte qu'il sert à éclairer l'hologramme de transmission avec une, plusieurs ou la vraie couleur.

5. Support d'informations (1) selon l'une quelconque des revendications précédentes, **caractérisé en ce que** d'un côté des deux couches d'hologramme ou de l'unique couche d'hologramme (4, 5), une couche (3) réfléchissant de la lumière dans la ou les couches d'hologramme (4, 5) est prévue.

6. Support d'informations (1) selon l'une quelconque des revendications précédentes, **caractérisé en ce que** l'hologramme de transmission et/ou l'hologramme de réflexion sont contenus de telle sorte qu'ils sont visibles seulement sous un ou plusieurs angles d'observation donnés.

7. Support d'informations (1) selon l'une quelconque des revendications précédentes, **caractérisé en ce que** les informations de l'hologramme de transmission et/ou de l'hologramme de réflexion comprennent au moins en partie des informations codées.

8. Support d'informations (1) selon la revendication 7, **caractérisé en ce que** les informations codées de l'hologramme de transmission sont la clé de décodage pour les informations codées de l'hologramme de réflexion, ou vice versa.

9. Support d'informations (1) selon l'une quelconque des revendications précédentes, **caractérisé en ce que** sur la surface d'observation (7) est appliquée une couche transparente de protection contre la copie avec une propriété tournant et/ou filtrant la polarisation de la lumière de lecture.

10. Support d'informations (1) selon l'une quelconque des revendications précédentes, **caractérisé en ce que** lorsque le support d'informations (1) est utilisé comme un scellé de sécurité, les informations codées de l'hologramme de transmission et/ou de l'hologramme de réflexion comprennent au moins en partie des informations personnalisées.

11. Procédé de fabrication d'un support d'informations selon la revendication 2, **caractérisé en ce que** l'hologramme de transmission et l'hologramme de réflexion sont respectivement enregistrés dans une couche d' hologramme (4 ; 5), et par la suite, les deux couches d'hologramme (4, 5) sont laminées l'une sur l'autre.

12. Procédé de fabrication d'un support d'informations selon la revendication 3, **caractérisé en ce que** dans une seule couche d'hologramme, on enregistre d'abord l'hologramme de réflexion et ensuite l'hologramme de transmission, ou vice versa.

13. Procédé de fabrication d'un support d'informations selon la revendication 3, **caractérisé en ce que** dans une seule couche d'hologramme, l'hologramme de transmission et l'hologramme de réflexion sont enregistrés en alternance, pixel par pixel ou ligne par ligne.

14. Procédé de fabrication selon la revendication 13, **caractérisé en ce que** l'enregistrement pixel par pixel ou ligne par ligne est effectué au moyen d'au moyen un masque correspondant, et **en ce que** l'hologramme de transmission et l'hologramme de réflexion sont enregistrés successivement.

15. Procédé de fabrication selon la revendication 12, **caractérisé en ce que** l'enregistrement pixel par pixel ou ligne par ligne est effectué au moyen d'un rayon lumineux commandé.
